(19) Europäisches Patentamt
European Patent Office
Office européen des brevets

(11) Publication number: **0 136 901**
**B1**

(12) # EUROPEAN PATENT SPECIFICATION

(45) Date of publication of patent specification: **26.07.89**

(51) Int. Cl.$^4$: **B 01 D 13/04**

(21) Application number: **84306672.1**

(22) Date of filing: **28.09.84**

(54) **Membranes for liquid separations.**

(30) Priority: **30.09.83 JP 180852/83**

(43) Date of publication of application:
**10.04.85 Bulletin 85/15**

(45) Publication of the grant of the patent:
**26.07.89 Bulletin 89/30**

(84) Designated Contracting States:
**DE FR GB**

(56) References cited:
**WO-A-83/01905**
**MEMBRANE, vol. 7, no. 6, 1982, Tokyo, JP; S. KIMURA et al.: "Pervaporation of alcohol-water mixtures with silicone rubber membrane"**
**JOURNAL OF MEMBRANE SCIENCE, vol. 7, 1980, pages 109-118, NL; E. NAGY et al.: "Membrane permeation of water-alcohol binary mixtures"**
**PATENT ABSTRACTS OF JAPAN, vol. 8, no. 46 (C-212)1483r, 29th February 1984; & JP - A - 58 206 611 (TOSHIBA) 01-12-1983**

(73) Proprietor: **TORAY INDUSTRIES, INC.**
**2, Nihonbashi-Muromachi 2-chome Chuo-ku**
**Tokyo 103 (JP)**

(72) Inventor: **Higashimura, Toshinobu**
**35 Kitashirakawa Ioricho Sakyo-ku**
**Kyoto-shi Kyoto-fu (JP)**
Inventor: **Masuda, Toshio**
**1-49, Kyomachi 1-chome**
**Ohtsu-shi Shiga-ken (JP)**

(74) Representative: **Cropp, John Anthony David et al**
**MATHYS & SQUIRE 10 Fleet Street**
**London, EC4Y 1AY (GB)**

**EP 0 136 901 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method for separating a liquid mixture by pervaporation, to the use of membranes in such liquid separations, and to novel membranes for use in liquid separations.

Recently, membrane separation processes for the separation of liquids have been applied to waste water treatment, desalination of sea-water and brackish water, and the separation and concentration of a solute, or the recovery of a solvent from various solutions in the food industry and medical field. Such membrane separation processes are expected to be largely developed in the near future.

Membrane separation is one of the separation processes in which the separation, concentration or purification is determined by the size and the quality of a substance dissolved in a solution. Such processes include pervaporation, reverse osmosis and osmotic extraction, and the choice of the process to be used is decided according to the purpose and the substance to be treated. The pervaporation process is a technique in which a liquid solution to be treated is fed on one side of a membrane, while the system on the opposite side of the membrane is evacuated or swept with a stream of a carrier gas, whereby the component permeating through the membrane is evaporated and taken out in a gaseous state. This technique has been investigated intensively in Europe and Japan. The advantages of this process are that it can be applicable to the separation of an azeotropic mixture which cannot be separated by an ordinary distillation, separation of a mixture of compounds having close boiling points, concentration of a compound which is sensitive to heat, or separation of isomers of, for example, xylene. Unlike the reverse osmosis process, these separations or concentrations are applicable over the entire range of compositions of the liquid solution to be treated.

In addition, because of recent fears of exhaustion of petroleum resources, petroleum-substitute energy resources, for example alcohols obtained through fermentation of a biomass such as corn, have been studied in various countries. However, the concentration of ethanol obtained through fermentation of biomass is less than 10%, and a large amount of energy is necessary for obtaining an absolute ethanol as a fuel through distillation. Consequently, this technique has not been practically used except in special countries at present. Thus, the development of energy-saving separation techniques, which could be substituted for distillation, has been attempted, and among such techniques, membrane separation techniques, particularly pervaporation, have been studied intensively as the most promising processes.

In most cases of known pervaporation membranes, water permeates selectively, as exemplified by the separation of ethanol from an aqueous solution thereof, and a certain kind of silicone rubber is the only case known in which ethanol permeates selectively instead of water.

An example in which a silicone rubber membrane is applied to the separation of ethanol is disclosed by, for instance, Kimura et al. in Membrane, 7, 353 (1982), but it shows a quite unsatisfactory result in respect of separation characteristics and permeation performances.

The pervaporation process using an ethanol-permselective membrane rather than a water-permselective membrane has advantages in the following two respects in the separation of a liquid mixture of ethanol and water.

(1) Since the concentration of an aqueous ethanol solution produced by fermentation is less than 10%, the amount of necessary heat of vaporization may be smaller in the case of the permeation of ethanol which accounts for 10% of the aqueous solution, than in the case of the permeation of water which accounts for 90% thereof. An energy saving may therefore be made.

(2) The ethanol-permselective membrane can deal with 9 times as much of a 10% aqueous ethanol solution, per unit membrane area, as the water-permselective membrane, when the permeation flow rate is the same. There is therefore a long felt need for an ethanol-permselective membrane which has excellent separation characteristics and permeation flow rate.

Although this description has referred to separation of a liquid mixture of ethanol and water, the pervaporation technique can be applied to the separation of various kinds of liquid mixture as mentioned hereinafter. A typical example is a liquid mixture of water-soluble organic substance and water such as that represented by the aforementioned liquid mixture of ethanol and water. Examples of other water-soluble organic substances are water-soluble alcohols such as methanol and n- and iso-propanol, and water-soluble ethers such as dioxane. From the industrial viewpoint, an important problem is the recovery of methanol, ethanol, n- or iso-propanol, dioxane or the like from their dilute aqueous solutions, and so there is great demand for the development of pervaporation membranes.

WO—A—8301905 describes a gas separation membrane the material of which is a polymer having the main repeating unit of the formula:

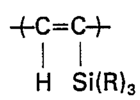

and/or formula:

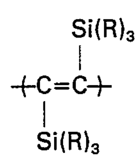

(where R represents alkyl, vinyl, allyl, cycloalkyl, aryl, benzyl or hydrogen, each R being possibly identical or different to each other) and having the number average molecular weight of between 1,000—1,000,000, or a partially or wholly hydrogenated product of said polymer with the unsaturation bonds therein.

According to the present invention, there is provided a method for separating a liquid mixture by pervaporation, wherein a membrane comprising mainly a polymer having a main repeating unit represented by the following formula:

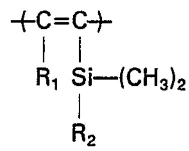

wherein $R_1$ represents a hydrogen atom or a methyl group, and $R_2$ represents an alkyl group having from 1 to 3 carbon atoms, is used as a separation membrane.

Further according to the present invention, there is provided the use for liquid separation by pervaporation of a membrane which comprises mainly polymer having a main repeating unit of the following formula:

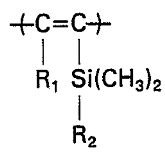

(I)

wherein $R_1$ represents a hydrogen atom or a methyl group, and $R_2$ represents an alkyl group having from 1 to 3 carbon atoms.

The present invention also provides a membrane for liquid separation which comprises mainly a polymer having a main repeating unit represented by the following formula:

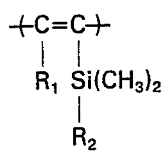

wherein $R_1$ represents a methyl group, and $R_2$ represents an alkyl group having from 1 to 3 carbon atoms.

Description of the preferred embodiments

The membrane for the liquid separation method according to the present invention is produced mainly from a polymer of a substituted acetylene monomer represented by the following formula:

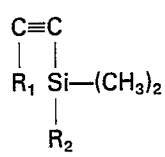

wherein $R_1$ and $R_2$ are the groups as defined above.

Examples of such substituted acetylene monomers are

$CH{\equiv}CSi(CH_3)_3$, $CH_3C{\equiv}CSi(CH_3)_3$, $CH{\equiv}CSi(CH_3)_2 \cdot C_2H_5$,
$CH_3C{\equiv}CSi(CH_3)_2 \cdot C_2H_5$, $CH{\equiv}Si(CH_3)_2 \cdot C_3H_7$, $CH_3C{\equiv}CSi(CH_3)_2 \cdot C_3H_7$

and the like.

The polymer may be prepared by solution-polymerization from one or more of the substituted acetylene monomers in the presence of a catalyst, for example, tantalum pentachloride.

The polymerization of such a substituted acetylene monomer can be easily performed according to the methods as disclosed in, for example, Japanese Patent Publication Nos. 37,312/1976, 20,511/1977, 43,037/1979, 23,565/1980 and 30,722/1980, and Japanese Patent Laid-Open Nos. 31,911/1982, 36,106/1982, 32,608/1983 and 95,541/1983. The intrinsic viscosity (η) of the poly-(substituted acetylene) used in the present invention is 0.05 to 10 l/g (0.5 to 100 dL/g), preferably 0.2 to 1 l/g (2 to 10 dL/g) at 30°C in toluene. If it is less than 0.05 l/g (0.5 dL/g), the membrane could not be formed successfully, while if it is higher than 10 l/g (100 dL/g), the viscosity of the polymer solution is too large to make membranes of uniform thickness. The degree of polymerization of the polymer is: $\overline{M}_n$=20,000—2,000,000 and $\overline{M}_w$=30,000—3,000,000, preferably, $\overline{M}_n$=100,000—1,000,000 and $\overline{M}_w$=200,000—1,500,000 in terms of polystyrene according to gel permeation chromatography.

$\overline{M_n}$ represents the number average molecular weight, and $\overline{M_w}$ represents the weight average molecular weight.

In general, the poly(substituted acetylene) membrane is obtained by dissolving in a solvent and casting the solution on an appropriate surface (such as a glass plate). The solvent is evaporated to obtain a film, and the film is peeled off by appropriate means to give the membrane. Alternatively, the membrane can be obtained as an asymmetric or anisotropic membrane by partial evaporation of the solvent followed by coagulation in a coagulating medium, as in the well known method for producing an asymmetric reverse osmosis membrane from an ordinary membrane material such as cellulose acetate. Furthermore, the polymer can be used as an active layer of a composite membrane by direct application of a diluted polymer solution onto a microporous substrate and evaporation of the solvent to form an ultra-thin active polymer layer on the microporous substrate.

Any organic solvent can be used for obtaining the membrane according to the present invention, so long as it can dissolve the poly(substituted acetylene) well and can be easily evaporated to form the membrane. For instance, the use of hydrocarbon solvents such as benzene, toluene, cyclohexane, or n-hexane, and halogenated hydrocarbon solvents such as carbon tetrachloride or chloroform, may give satisfactory results.

Though the film thickness of the membrane is not specifically restricted, it is ordinarily preferably in a range of 0.01 to 500 μm. However, the thinner film thicknesses within such a range are preferred provided the separation performance is not lowered. On the other hand, the thickness may be increased within such a range that the permeation flow rate may not be lowered for practical use.

The membrane obtained is in a form of a flat sheet membrane, which can be incorporated into a liquid separator known as a spiral type, a plate and frame type, or a tubular type. Further, the membrane can be formed into a hollow fiber or a composite hollow fiber, and it can be incorporated into a liquid separator of the hollow fiber type for use. However, the present invention is not dependent on the form of the membrane used.

In the case of the practical use of the membrane according to the present invention, commonly a liquid mixture (for instance, a liquid mixture of ethanol and water) is fed to one side of the membrane, while the opposite side is evacuated. The pressure on the feed side may be in the range of 100 to 10,000 kPa (1 to 100 atm) and, industrially, the pressure is preferably near atmospheric pressure. It is preferable, however, that the pressure on the vacuum side is as low as possible, and pressures in the range of 13.3 Pa to 13.3 kPa (0.1 to 100 mHg) are industrially used.

The membrane described above exhibits excellent performance as a pervaporation membrane permeable to water-soluble organic substances. The reason for this is not clear. When this film productivity and the separation performance are taken into account, a polymer of $CH_3C{\equiv}CSi(CH_3)_3$ is particularly useful.

The alternating double bonds forming the main chain of the poly(substituted acetylene) are considered to contribute to the provision of the rigidity of the molecular chain in respect of the film productivity, but polymers in which the double bonds are partially reduced by, for example, hydrogenation to such an extent that the separation performance is not adversely affected, can be used.

The membrane of the present invention can be obtained from the poly(substituted acetylene) or the polymer copolymerized with other monomer(s), or polymer blends with other polymer(s) so long as the performances thereof are not damaged.

The following Examples and Comparative Examples illustrate the usefulness of the liquid separation process according to the present invention, particularly in the separation of a liquid mixture of water-soluble alcohol and water, and a liquid mixture of water-soluble ether and water. The separation factor α and the permeation flow rate Q are calculated by the following formulae:

$$\alpha_B^A=\frac{C_A^1/C_B^1}{C_A^0/C_B^0}$$

$C^1$ is the concentration of component in the permeate, $C^0$ is the concentration in the liquid feed, and A and B refer to the respective components. For instance, in $\alpha_{H_2O}^{EtoH}$ in which A and B are ethanol and water respectively, $C_A^0$ is the concentration (%) of the ethanol in the feed, $C_B^0$ is that (%) of the water in the feed, $C_A^1$ is that (%) of the ethanol on the permeation side, and $C_B^1$ is that (%) of the water on the permeation side.

$$Q=W/A$$

wherein W is the permeation amount per hour (kg/hr), and A is the area ($m^2$) of the membrane. The following examples are illustrative of the invention.

Example 1

One gram of 1 - trimethylsilyl - 1 - propyne was dissolved in 5 ml of toluene and the solution was added to 71 mg of tantalum pentachloride dissolved in 5 ml of toluene. Reaction was carried out at 80°C for 24 hours. Thereafter, the reaction was stopped by adding methanol thereto, and purification was made with toluene-methanol to obtain 0.9 g of polymer. The yield was 90%, and the intrinsic viscosity and the

molecular weight of the obtained polymer were: [η]=0.54 l/g (5.4 dL/g), and $\overline{M}_n$=600,000 and $\overline{M}_w$=850,000, respectively.

The polymer was dissolved in cyclohexane to prepare a 3% solution. After this solution was cast in a thickness of 210 μm on a glass plate, the solvent was evaporated at 50°C for 1 hour to obtain a uniform film of 4.3 μm in thickness. Separation of a liquid mixture of ethanol and water was measured by using this film according to the pervaporation technique under conditions where the feed was a 10% aqueous ethanol solution, the temperature of the feed was 30°C, the pressure of the feed was 100 kPa (1 atm), and the pressure of the permeation side was 1.33 kPa (10 mmHg). The high separation factor and high permeation flow rate of the membrane are indicated by the data represented in Table 1.

Comparative Example 1

A polymer obtained from $CH{\equiv}CC(CH_3)_3$ was dissolved in n-hexane to prepare a 6.8% solution. After this solution was cast in a thickness of 210 μm on a glass plate, the solvent was evaporated at 50°C for 1 hour to obtain a uniform film of 20.8 μm in a thickness. Separation of a 10% aqueous ethanol solution was measured by using the obtained film according to the pervaporation technique under the same conditions as in Example 1. The results are set out in Table 1.

Comparative Example 2

RTV silicone rubber solution (SH 780, a product of Toray Silicone Co., Ltd.) was cast in a thickness of 500 μm on a Teflon plate, and cross-linked at room temperature to obtain a uniform film of 70 μm in thickness. Separation of a liquid mixture of ethanol and water was made by using the obtained film according to the pervaporation technique under conditions where the feed is a 10% aqueous ethanol solution, the temperature of the feed was 30°C, the pressure of the feed was 100 kPa (1 atm), and the pressure of the permeation side was 1.33 kPa (10 mmHg). The results are set out in Table 1.

Example 2

The polymer obtained from $CH_3C{\equiv}CSi(CH_3)_3$ was dissolved in cyclohexane to prepare a 3% solution. After this solution was cast in a thickness of 500 μm on a glass plate, the solvent was evaporated at 50°C for 1 hour to obtain a uniform film of 10.7 μm in thickness. Separation of a liquid mixture of methanol and water was made by using the obtained film according to the pervaporation technique under conditions where the feed was a 9.2% aqueous methanol solution, the temperature of the feed was 30°C, the pressure of the feed was 100 kPa (1 atm), and the pressure of the permeation side was 1.33 kPa (10 mmHg). The results are set out in Table 1.

Example 3

Separation of a liquid mixture of isopropanol and water was made by using the same film as in Example 2 according to the pervaporation technique under conditions where the feed was a 13.0% aqueous isopropanol solution, the temperature of the feed was 30°C, the pressure of the feed was 100 kPa (1 atm), and the pressure of the permeation side was 1.33 kPa (10 mmHg). The results are set out in Table 1.

Example 4

Separation of a liquid mixture of dioxane and water was made by using the same film as in Example 2 according to the pervaporation technique under the same conditions as in Example 2 except that the feed was a 6.1% aqueous dioxane solution. The results are set out in Table 1.

Example 5

A polymer obtained from $CH_3C{\equiv}CSi(CH_3)_2 \cdot C_2H_5$ was dissolved in cyclohexane to prepare a 3% solution. The intrinsic viscosity and the molecular weight of the obtained polymer were: [η]=0.6 l/g (6.0 dL/g), $\overline{M}_n$=700,000 and $\overline{M}_w$=900,000, respectively. After this solution was cast in a thickness of 500 μm on a glass plate, the solvent was evaporated to obtain a uniform film of 10.5 μm in thickness. Separation of a liquid mixture of ethanol and water was made by using the obtained film according to the pervaporation technique under conditions where the feed was a 10% aqueous ethanol solution, the temperature of the feed was 30°C, the pressure of the feed was 100 kPa (1 atm), and the pressure of the permeation side was 1.33 kPa (10 mmHg). The results are set out in Table 1.

TABLE 1

| | Feed (A/$H_2O$) | $\alpha^{A}_{H_2O}$ | Q(kg/$m^2$ · hr) |
|---|---|---|---|
| Example 1 | EtOH/$H_2O$ | 30.43 | 1.91 |
| Comparative Example 1 | EtOH/$H_2O$ | 0.41 | 0.086 |
| Comparative Example 2 | EtOH/$H_2O$ | 7.21 | 0.067 |
| Example 2 | MeOH/$H_2O$ | 9.37 | 0.31 |
| Example 3 | i-PrOH/$H_2O$ | 10.26 | 0.54 |
| Example 4 | Dioxane/$H_2O$ | 8.62 | 0.34 |
| Example 5 | EtOH/$H_2O$ | 12.57 | 0.37 |

## Claims

1. A method for separating a liquid mixture by pervaporation, wherein a membrane comprising mainly a polymer having a main repeating unit represented by the following formula:

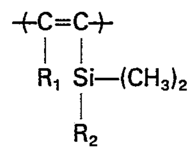

wherein $R_1$ represents a hydrogen atom or a methyl group, and $R_2$ represents an alkyl group having from 1 to 3 carbon atoms, is used as a separation membrane.

2. A method according to claim 1, wherein said liquid mixture is a mixture of a water-soluble organic substance and water.

3. A method according to claim 2, wherein said water-soluble organic substance is a water-soluble alcohol.

4. A method according to claim 2, wherein said water-soluble organic substance is a water-soluble ether.

5. A method according to claim 3, wherein said water-soluble alcohol is one selected from methanol, ethanol and propanol.

6. A method according to claim 4, wherein said water-soluble ether is dioxane.

7. A membrane for liquid separation which comprises mainly a polymer having a main repeating unit represented by the following formula:

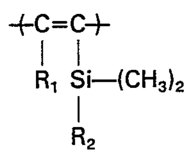

wherein $R_1$ represents a methyl group, and $R_2$ represents an alkyl group having from 1 to 3 carbon atoms.

8. A membrane for liquid separation according to claim 7, wherein $R_1$ and $R_2$ are methyl groups.

9. A membrane for liquid separation according to claim 7 or claim 8, wherein said membrane is a pervaporation membrane.

10. The use in liquid separation by pervaporation of a membrane which comprises mainly a polymer having a main repeating unit represented by the following formula:

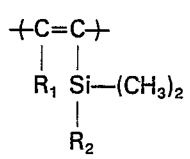

wherein $R_1$ represents a hydrogen atom or a methyl group, and $R_2$ represents an alkyl group having from 1 to 3 carbon atoms.

**Patentansprüche**

1. Verfahren zur Trennung einer flüssigen Mischung durch Pervaporation, bei dem eine Membran als Trennmembran verwendet wird, die hauptsächlich ein Polymer mit einer wiederkehrenden Haupteinheit der Formel

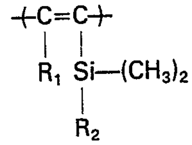

enthält, worin $R_1$ ein Wasserstoffatom oder eine Methylgruppe, und $R_2$ eine Alkylgruppe mit 1 bis 3 Kohlenstoffatomen bedeutet.

2. Verfahren nach Anspruch 1, bei dem die flüssige Mischung eine Mischung aus einer wasserlöslichen organischen Substanz und Wasser ist.

3. Verfahren nach Anspruch 2, bei dem die wasserlösliche organische Substanz ein wasserlöslicher Alkohol ist.

4. Verfahren nach Anspruch 2, bei dem die wasserlösliche organische Substanz ein wasserlöslicher Ether ist.

5. Verfahren nach Anspruch 3, bei dem der wasserlösliche Alkohol aus Methanol, Ethanol und Propanol ausgewählt wird.

6. Verfahren nach Anspruch 4, bei dem der wasserlösliche Ether Dioxan ist.

7. Membran zur flüssigen Trennung, die hauptsächlich ein Polymer enthält, das eine Hauptrepetiereinheit entsprechend der folgenden Formel

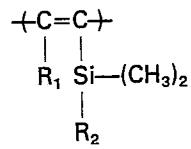

enthält, worin $R_1$ eine Methylgruppe und $R_2$ eine Alkylgruppe mit 1 bis 3 Kohlenstoffatomen bedeutet.

8. Membran zur flüssigen Trennung nach Anspruch 7, worin $R_1$ und $R_2$ Methylgruppen sind.

9. Membran zur flüssigen Trennung nach Anspruch 7 oder 8, worin die Membran eine Pervaporationsmembran ist.

10. Verwendung einer Membran in der Flüssigtrennung durch Pervaporation, die hauptsächlich ein Polymer mit einer wiederkehrenden Haupteinheit enthält, die der folgenden Formel entspricht:

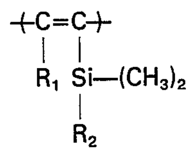

worin $R_1$ ein Wasserstoffatom oder eine Methylgruppe und $R_2$ eine Alkylgruppe mit 1 bis 3 Kohlenstoffatomen bedeutet.

**Revendications**

1. Procédé de séparation d'un mélange de liquides par évaporation à travers une membrane, dans lequel on utilise comme membrane de séparation une membrane comprenant principalement un polymère ayant un motif principal représenté par la formule suivante:

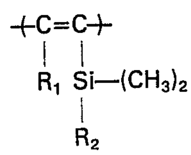

dans laquelle $R_1$ représente un atome d'hydrogène ou un groupe méthyle, et $R_2$ représente un groupe alkyle en $C_1$ à $C_3$.

2. Procédé selon la revendication 1, dans lequel ce mélange de liquides est un mélange d'une substance organique soluble dans l'eau et d'eau.

3. Procédé selon la revendication 2, dans lequel cette substance organique soluble dans l'eau est un alcool soluble dans l'eau.

4. Procédé selon la revendication 2, dans lequel cette substance organique soluble dans l'eau est un éther soluble dans l'eau.

5. Procédé selon la revendication 3, dans lequel cet alcool soluble dans l'eau est choisi parmi le méthanol, l'éthanol, et le propanol.

6. Procédé selon la revendication 4, dans lequel cet éther soluble dans l'eau est le dioxane.

7. Membrane pour la séparation des liquides qui comprend principalement un polymère ayant un motif principal représenté par la formule suivante:

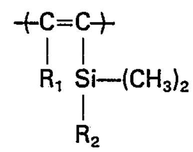

dans laquelle $R_1$ représente un groupe méthyle, et $R_2$ représente un groupe alkyle en $C_1$ à $C_3$.

8. Membrane pour la séparation des liquides selon la revendication 7, dans laquelle $R_1$ et $R_2$ sont des groupes méthyle.

9. Membrane pour la séparation des liquides selon les revendications 7 ou 8, dans laquelle cette membrane est une membrane à travers laquelle on effectue une évaporation.

10. Utilisation dans la séparation des liquides par évaporation à travers une membrane qui comprend principalement un polymère ayant un motif principal représenté par la formule suivante:

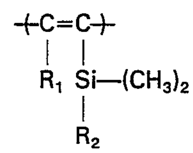

dans laquelle $R_1$ représente un atome d'hydrogène ou un groupe méthyle, et $R_2$ représente un groupe alkyle en $C_1$ à $C_3$.